Europäisches Patentamt

European Patent Office

Office européen des brevets

(19)

(11) **EP 0 953 239 B1**

(12) **EUROPÄISCHE PATENTSCHRIFT**

(45) Veröffentlichungstag und Bekanntmachung des Hinweises auf die Patenterteilung:
**24.11.2004 Patentblatt 2004/48**

(21) Anmeldenummer: **96913426.1**

(22) Anmeldetag: **21.05.1996**

(51) Int Cl.⁷: **H04J 3/07**

(86) Internationale Anmeldenummer:
**PCT/CH1996/000197**

(87) Internationale Veröffentlichungsnummer:
**WO 1997/044923 (27.11.1997 Gazette 1997/51)**

(54) **STOPFVERFAHREN FÜR PLESIOCHRONE DATENÜBERTRAGUNG (II)**

PADDING PROCESS FOR PLESIOCHRONOUS DATA TRANSMISSION (II)

PROCEDE DE REMPLISSAGE POUR LA TRANSMISSION PLESIOCHRONE DE DONNEES

(84) Benannte Vertragsstaaten:
**AT BE CH DE DK ES FI FR GB GR IE IT LI LU MC NL PT SE**
Benannte Erstreckungsstaaten:
**LT LV SI**

(43) Veröffentlichungstag der Anmeldung:
**03.11.1999 Patentblatt 1999/44**

(73) Patentinhaber: **Keymile AG**
**3097 Liebefeld (CH)**

(72) Erfinder:
• **MENZI, Ulrich**
 **CH-34000 Burgdorf (CH)**
• **ZAHND, Hans**
 **CH-3543 Emmenmatt (CH)**

(74) Vertreter:
**Roshardt, Werner Alfred, Dipl.-Phys. et al**
**Keller & Partner**
**Patentanwälte AG**
**Schmiedenplatz 5**
**Postfach**
**3000 Bern 7 (CH)**

(56) Entgegenhaltungen:
**EP-A- 0 248 551        EP-A- 0 549 125**
**WO-A-91/18457**

• **ICASSP-94. 1994 IEEE INTERNATIONAL CONFERENCE ON ACOUSTICS, SPEECH AND SIGNAL PROCESSING (CAT. NO.94CH3387-8), PROCEEDINGS OF ICASSP '94. IEEE INTERNATIONAL CONFERENCE ON ACOUSTICS, SPEECH AND SIGNAL PROCESSING, ADELAIDE, SA, AUSTRALIA, 19-22 APRIL 1, ISBN 0-7803-1775-0, 1994, NEW YORK, NY, USA, IEEE, USA, Seiten IV/169-172 vol.4, XP000616703 ABEYSEKERA S S: "Optimum stuff threshold modulation schemes for digital data transmission"**
• **PROCEEDINGS OF THE INTERNATIONAL CONFERENCE ON COMMUNICATION TECHNOLOGY, Bd. 2, 5. - 7.Mai 1996, Seiten 825-828, XP000613378 ABEYSEKERA S S ET AL: "SELECTION OF STUFF THRESHOLD MODULATION DITHER SEQUENCES FOR KNOWN SYN-DES OPERATING CONDITIONS"**

# EP 0 953 239 B1

## Beschreibung

### Technisches Gebiet

Die Erfindung betrifft ein Stopfverfahren für plesiochrone Datenübertragung, bei welcher

a) auf der Basis eines ersten Taktsignals in einen elastischen Speicher eingegeben und
b) auf der Basis eines zweiten Taktsignals, welches asynchron zum ersten läuft, ausgegeben werden, wobei beim Auslesen
c) am Ende eines Datenrahmens Stopfbits nach Bedarf eingefügt werden und zwar gestützt darauf, dass eine zwischen den Taktsignalen gemessene Phasendifferenz mindestens eine vorgegebene Schwelle über- oder unterschreitet.

Weiter betrifft die Erfindung ein Datenübertragungssystem und ein Terminal zur Durchführung des Verfahrens.

### Stand der Technik

Wenn in einem Datenübertragungssystem zwei nicht synchronisierte Taktbereiche mit etwa der gleichen Taktrate aufeinander treffen, ist an der Schnittstelle ein elastischer Speicher vorzusehen (FIFO-Speicher), in welchen mit der einen Datenrate eingegeben und mit der anderen ausgelesen wird. In der Praxis werden die Frequenzen der beiden Taktsignale in aller Regel um einige ppm abweichen. Um sicherzugehen, dass der elastische Speicher nicht überfüllt werden kann, wird die Frequenz des auslesenden Taktsignals geringfügig, aber hinreichend grösser gewählt als diejenige des einspeichernden. Entsprechend werden ab und zu Stopfbits in den ausgehenden Datenstrom eingefügt. Das Einfügen erfolgt - falls erforderlich - jeweils am Ende eines Datenrahmens. Dies führt somit dazu, dass die Länge des Datenrahmens (bzw. bei fest vorgegebener Rahmenlänge - die Anzahl der Nutzbits im Datenrahmen) variiert. Wird nun in einer nachfolgenden Komponente des Übertragungssystems ein Taktsignal aus der Rahmenlänge (bzw. der Blocklänge der Nutzbits) abgeleitet, dann entsteht ein niederfrequenter "Wander" oder Phasenjitter.
Es ist bekannt, dass die Jitteramplituden durch geeignete Wahl des Stopfverfahrens reduziert werden können. Aus dem Artikel "Measured pulse-stuffing jitter in asynchronous DS-1/sonet multiplexing with and without stuff-threshold modulation circuit", W. D. Grover et al, electronics letters 27.08.1987, Vol. 23 Nr. 18, Seiten 959-961, ist z. B. bekannt, dass eine Stopfschwellenmodulation mit einer Sägezahnkurve bessere Resultate liefern kann als ein konstanter Schwellenwert.

### Darstellung der Erfindung

Aufgabe der Erfindung ist es, ein Verfahren der eingangs genannten Art anzugeben, das eine über den Stand der Technik hinausgehende Reduktion der Jitteramplituden erlaubt.
Die erfindungsgemässe Lösung ist durch die Merkmale des Anspruchs 1 definiert. Demzufolge wird eine zwischen den Taktsignalen bestehende Differenzfrequenz (z. B. in Form einer ppm-Abweichung) gemessen und in Abhängigkeit davon, in welchem von mehreren vorgegebenen (Differenzfrequenz-) Segmenten sie liegt, eine entsprechend vordefinierte Modulationskurve als Schwelle eingesetzt wird. Die (Schwellenwert-)Modulationskurve kann also von Segment zu Segment anders sein. Erfindungsgemäss sind mindestens zwei verschiedene Segmente mit verschiedenen Modulationskurven vorgegeben.
Vorzugsweise ist in jedem Segment eine im Hinblick auf minimale Jitteramplituden optimierte Modulationskurve festgelegt. Es hat sich gezeigt, dass es sehr viel einfacher ist, für nur einen Ausschnitt der insgesamt zulässigen maximalen Differenzfrequenz starke Amplitudenmaxima zu vermeiden, als für den gesamten Bereich. Es gibt z. B. Modulationskurven, die unmittelbar neben dem Nullpunkt (welcher dadurch definiert ist, dass die Stopfrate $\rho = 0{,}5$ beträgt) hohe Amplituden auftreten. Im Rahmen der Erfindung kann z. B. der dem Nullpunkt benachbarte Bereich als eigenes Segment definiert werden, das mit einer eigenen Modulationskurve arbeitet. D. h. ausserhalb des genannten Segments könnte eine Modulationskurve "A" verwendet werden, während innerhalb desselben eine andere Modulationskurve "B" herangezogen wird.
Vorzugsweise sind die Segmente verschieden gross. Dies muss jedoch nicht für alle zutreffen, einige können ohne weiteres gleich gross sein.
Zur Erzeugung einer numerisch optimierten Modulationskurve für ein bestimmtes Segment (oder ganz allgemein eines bestimmten Bereichs) wird erfindungsgemäss wie folgt vorgegangen:

a) Ermitteln eines dem gewählten Segment entsprechenden Bereichs der Stopfrate $\rho$ (z. B. $\rho\in[0.53, 0.57]$), d, h, der Grenzwerte des zulässigen $\rho$-Bereichs;

b) Festlegen einer gewünschten Anzahl N von Stützwerte $T_0$, ..., $T_{N-1}$ und einer numerischen Auflösung $\varepsilon$ für jeden Stützwert

c) Festlegen eines gewünschten maximalen Indexes $K_{max}$ und Bestimmen aller Indexpaare (K, m), für die die Stopfrate $\rho$ = m/KN im (gemäss Schritt a) zulässigen Bereich der Stopfrate $\rho$ liegt (m = 0, 1, 2, ...; K = 1, 2, 3, ...);

d) Ermitteln derjenigen Stützwerte $T_0$, ..., $T_{N-1}$, die zu den kleinsten Werten der grössten auftretenden Amplituden $D_{K, m}$ führen. Die genannten Amplituden sind dabei wie folgt definiert:

$$D_{K,m} = \frac{1}{\pi \cdot K} \sqrt{(d^r_{K,m})^2 + (d^i_{K,m})^2}$$

*wobei* :

$$d^r_{K,m} = \frac{1}{N} \cdot \sum_{n=0}^{N-1} \cos\left[ 2 \cdot \pi \cdot \left( K \cdot T_n - \frac{m \cdot n}{N} \right) \right]$$

$$d^i_{K,m} = \frac{1}{N} \cdot \sum_{n=0}^{N-1} \sin\left[ 2 \cdot \pi \cdot \left( K \cdot T_n - \frac{m \cdot n}{N} \right) \right]$$

Auf diese Weise lässt sich für jedes Segment (oder irgend einen beliebigen ppm Bereich) eine numerisch optimierte Modulationskurve berechnen. Es versteht sich, dass diese Optimierung im voraus durchgeführt werden muss. Die ermittelten Modulationskurven werden in Form von Wertetabellen in einem Speicher im Datenübertragungssystem abgespeichert. Das Stopfverfahren wählt dann einfach die richtige Tabelle aus und liest die von Datenrahmen zu Datenrahmen variierenden Werte aus.

Es leuchtet ein, dass die bevorzugte numerische Optimierungsmethode im Prinzip unabhängig von der Segmentation des Differenzfrequenzbereichs eingesetzt werden kann.

Vorzugsweise ist die Periodizität N $\leq$ 10. Gute Resultate lassen sich mit 5 $\leq$ N $\leq$ 7 erreichen. Der maximale Wert des (ganzzahligen) Indexes K ist vorzugsweise nicht grösser als $2^5$. Es zeigt sich nämlich, dass die Amplituden $D_{K, m}$ proportional zu 1/K sind. Die zu minimierenden maximalen Amplitudenwerte liegen als vorwiegend bei kleinen Indexwerten.

Die Aufllösung $\varepsilon$ sollte besser als 1/5 sein. Gute Resultate wurden z. B. mit einer Aufllösung 1/20 erreicht. Bei allzu feiner Auflösung (z. B. < 1/100) wird die numerische Optimierung sehr langwierig und vermag trotzdem keine entsprechende Verbesserungen des Resultats hervorzubringen.

Gemäss einer bevorzugten Ausführungsform sind für einen Differenzfrequenzbereich von z. B. - 80 ppm bis + 80 ppm 9 Segmente vorgesehen. Die erfindungsgemässe Segmentation dürfte ihre Stärken typischerweise ab 4 Segmenten entfalten. Die optimale Anzahl wird jedoch vom Einzelfall abhängen. In einem konkreten Anwendungsfall wurde erfolgreich mit z. B. 9 oder 14 Segmenten operiert.

Wesentlich an einem erfindungsgemässen Datenübertragungssystem ist ein Terminal, welches eine Schaltung zum Bestimmen einer zwischen den Taktsignalen bestehenden Differenzfrequenz und eines entsprechend relevanten Segments hat, und das über einen Speicher verfügt, der für jedes Segment eine Modulationskurve enthält. Bei ungleich grossen Segmenten ist ferner eine Tabelle mit den jeweiligen Segmentgrenzen vorzusehen.

Aus der Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen.

Fig.1    eine schematische Darstellung eines plesiochronen Übertragungssystems;

Fig. 2    ein Blockschaltbild einer Schaltung zur Durchführung der Stopfkontrolle (stuff control);

Fig. 3    eine schematische Darstellung einer Schaltung zum Bestimmen der Differenzfrequenz;

Fig. 4    eine schematische Darstellung der erfindungsgemässen Segmentierung des Differenzfrequenzbereichs.

**Wege zur Ausführung der Erfindung**

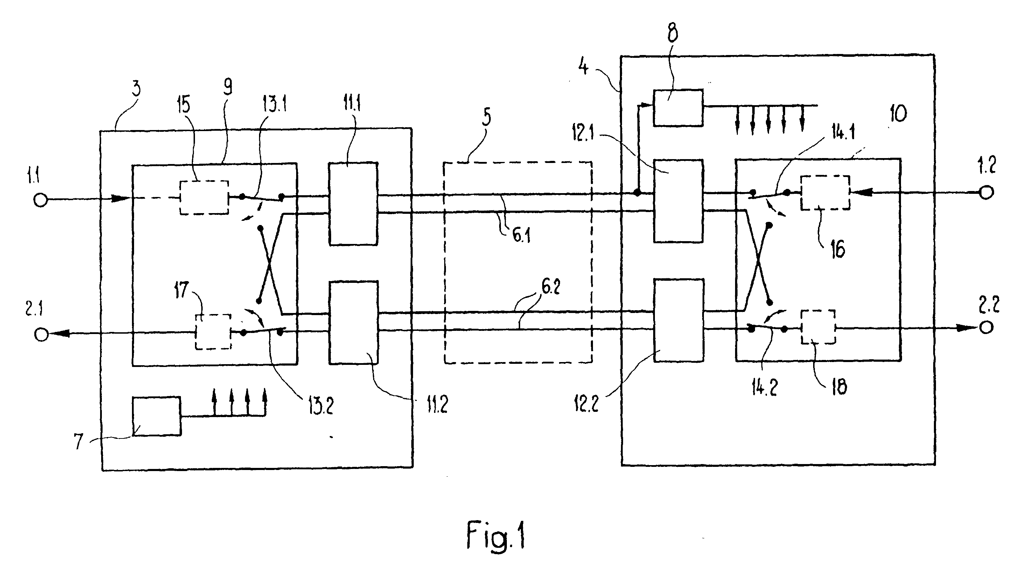

Fig. 1 zeigt schematisch ein Beispiel für ein Übertragungssystem. Dieses ist für den Vollduplexbetrieb ausgebildet. Es wird davon ausgegangen, dass Daten zwischen einer ersten und einer zweiten Station übertragen werden sollen. Entsprechend sind an beiden Orten eine Datenquelle 1.1 bzw. 1.2 und eine Datensenke 2.1 bzw. 2.2 vorgesehen. Datenquellen 1.1, 1.2 und Datensenken 2.1, 2.2 sind typischerweise in externen Geräten (Computer, digitale Telefonstation o. dgl.) enthalten. Die Datenraten dieser Geräte sind beispielsweise auf nominell 2'048 Kbit/s festgelegt. Hardwaremässig ist diese z. B. durch eine Nominalfrequenz mit Toleranzbereich vorgegeben (z. B. f = 2'048 KHz $\pm$ 50 ppm).

Für jede dieser Stationen ist nun ein Terminal 3 bzw. 4 vorhanden. Die Datenübertragung zwischen den Terminals 3, 4 (d. h. die Übertragungsstrecke 5) ist beispielsweise durch zwei Kupferdrahtpaare 6.1, 6.2 gebildet. Diese werden mit einer Datenrate betrieben, die etwas höher ist als die halbe Datenrate der Datenquellen 1.1, 1.2. Sie beträgt z. B. 1'168 Kbit/s (HDSL clockrate). Die maximale Übertragungsleistung liegt also bei 2'336 Kbit/s.

Das eine der beiden Terminals hat einen unabhängigen Taktsignalgenerator 7 zur Erzeugung des Taktsignals für die Datenübertragung. Dieses Taktsignal wird im zweiten Terminal 4 durch den Taktsignalableiter 8 übernommen. Die Terminals 3, 4 sind also untereinander synchronisiert.

Die plesiochrone Schnittstelle besteht zwischen den Terminals 3, 4 und den externen Datenquellen bzw. -senken 1.1, 1.2 bzw. 2.1, 2.2. Mit einer Steuerschaltung 9 bzw. 10 (Framer) werden einerseits die zu übertragenden Daten auf die beiden Kupferdrahtpaare 6.1, 6.2 aufgeteilt und andererseits die empfangenen Daten zusammengeführt und an die Datensenke 2.1 bzw. 2.2 ausgegeben. Die Kupferdrahtpaare 6.1, 6.2 werden von Sender-/Empfängerschaltungen 11.1, 11.2, 12.1, 12.2 (data pumps) bedient. Die Steuerschaltung 9 bzw. 10 verteilt die zu übertragenden Daten auf die beiden Sender-/Empfängerschaltungen 11.1, 11.2 bzw. 12.1, 12.2 (Schalter 13.1, 14.1) und führt andererseits die eintreffenden Daten zusammen (Schalter 13.2, 14.2).

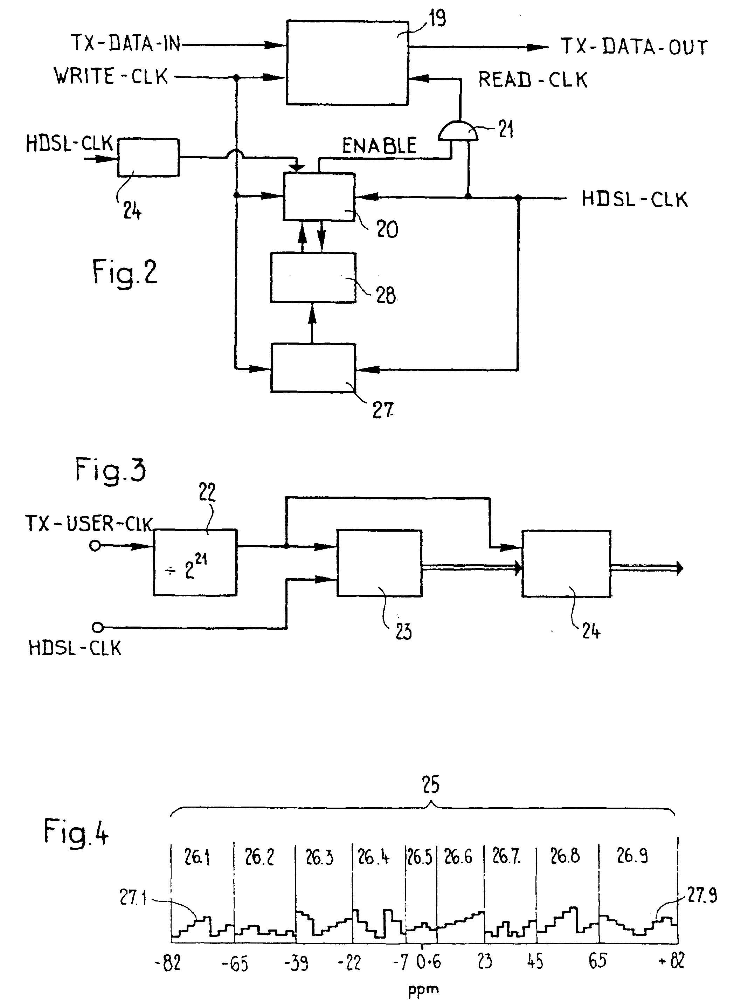

Das Erfindungswesentliche ist die in der Steuerschaltung 9, 10 integrierte Stopfkontrollschaltung 15, 16. Diese umfasst gemäss Fig. 2 jeweils einen elastischen Speicher 19, einen Vergleicher 20 und ein AND-Gate 21. Auf der Basis des Taktsignals (WRITE_CLK) der Signalquelle 1.1 werden die zu übertragenden Daten (TX_DATA_IN) in den Speicher 19 eingegeben. Ausgegeben werden sie auf der Basis des Taktsignals des Übertragungssystems (HDSL_CLK). Da das Auslesen mit leicht höherer Taktrate erfolgt als das Eingeben, müssen ab und zu Stopfbits eingefügt werden. Zur Kontrolle dieses Vorgangs ist ein Vergleicher 20 vorgesehen, welcher die beiden Taktsignale (WRITE_CLK und HDSL_CLK) vergleicht und in Abhängigkeit der innerhalb eines Datenrahmens akkumulierten Phasendifferenz ein enable-Signal erzeugt, das im AND-Gate 21 mit dem HDSL-Taktsignal verknüpft wird. Ein Rahmenendpulsgenerator 24 zeigt jeweils das Ende eines Nutzdatenblocks an. Immer wenn die Phasendifferenz beim Auftreten des Rahmenendpulses einen bestimmten Schwellenwert überschreitet, dann wird der Auslesetakt (READ_CLK) für z. B. 4 HDSL-Taktperioden angehalten. (Da empfängerseitig die Anzahl der Nutzbits pro Datenrahmen bekannt sind, ist es möglich, die auf die genannte Weise erzeugten Stopfbits zu eliminieren.)

Im Rahmen der Erfindung wird nun der Schwellenwert für die Phasendifferenz von Rahmen zu Rahmen in bestimmter Weise variiert (Stopfschwellenmodulation). Zu diesem Zweck ist vorab die Differenzfrequenz zu bestimmen. Im gezeigten Beispiel ist ein Frequenzdiskriminator 27 vorgesehen, welcher WRITE_CLK und HDSL_CLK vergleicht und die Differenzfrequenz (z. B. in Form eines Zählerstandes, der in einen ppm Wert umgerechnet werden kann) an den Tabellenspeicher 28 übergibt.

Fig. 3 zeigt beispielhaft eine Schaltung zum Messen der Differenzfrequenz. Das Taktsignal TX_USER_CLK der externen Datenquelle wird auf den Eingang eines Frequenzteilers 22 gegeben. Dieser realisiert beispielsweise ein Teilungsverhältnis $2^{21}$. Das resultierende heruntergeteilte Ausgangssignal wird einerseits auf den Reset-Eingang eines Zählers 23 und andererseits auf den Clock-Eingang eines Speichers 24 gegeben. Der Zähler 23 wird vom Taktsignal HDSL_CLK inkrementiert (und entsprechend dem Ausgangspuls der Frequenzteilers 22 zurückgesetzt). Ausgangsseitig des Zählers 23 wird ein Wort (Zählerstand) mit 8 Bit erzeugt, welches im Speicher 24 abgelegt wird. Von dort kann es z. B. von einem Mikroprozessor des Terminals abgeholt werden (zwecks Bestimmung des relevanten Segments und der richtigen Modulationskurve).

Es ist klar, dass die Differenzfrequenz auch auf andere Weise bestimmt werden kann.

Immer wenn der Vergleicher 20 am Rahmenende einen Schwellenwert braucht, greift er auf den Tabellenspeicher 28 zu. Dort sind gemäss der Erfindung eine Mehrzahl von digitalisierten Modulationskurven abgelegt. Welche dieser Kurven zu benutzen ist, hängt von der ermittelten Differenzfrequenz ab. Im folgenden soll die Segmentierung des Differenzfrequenzbereichs und die geeignete Wahl der Modulationskurven erläutert werden.

In Fig. 4 ist beispielhaft ein Bereich 25 von - 82 ppm bis + 82 ppm dargestellt. Dieser Bereich 25 hängt von den konkreten Systemparametern ab. Er ergibt sich im wesentlichen dadurch, dass sowohl das Taktsignal der Datenquelle als auch dasjenige des Übertragungssystems um einen vorgegebenen Bereich vom Nominalwert abweichen dürfen. Die maximale ppm-Abweichung ist in der Regel durch eine Norm definiert. (Die in der vorliegenden Beschreibung verwendeten ppm Werte stellen im Prinzip die Summe der relativen Abweichungen des User-Taktes und des HDSL-Taktes vom jeweils vorgegebenen Nominalwert der entsprechenden Taktrate dar.)

Der ganze ppm Bereich 25 wird gemäss der Erfindung in eine Mehrzahl von Segmenten 26.1 bis 26.9 aufgeteilt. Jedem Segment ist eine (digitale) Modulationskurve 27.1 bis 27.9 zugeordnet. Wie aus den angegebenen ppm-Werten erkennbar ist, sind nicht alle Segmente 26.1 bis 26.9 gleich gross. Insbesondere sind die Segmente nahe bei 0 ppm kleiner als die bei höheren ppm Werten. Das kleinste Segment 26.5 liegt im vorliegenden Beispiel in der Mitte, die grössten Segmente 26.1, 26.9 liegen aussen.

Jeder Abweichung (Xppm) im ppm Bereich entspricht eine Stopfrate $\rho$. Der Zusammenhang ist durch die folgende Formel bestimmt.

$$\rho = \frac{L}{4}\left[\frac{L+2}{L(1+Xppm)} - 1\right]$$

L = Anzahl Nutzbits pro Datenrahmen

Für jedes Segment kann eine andere Modulationskurve bestimmt werden. Gemäss einer bevorzugten Ausführungsform ergibt sie sich aus einer numerischen Optimierung der folgenden Art:

1. Zunächst wird ein Segment ausgewählt und der entsprechende Bereich für die Stopfrate $\rho$ ermittelt. Weiter wird die Anzahl N der Stützwerte $T_0$, ..., $T_{N-1}$ nach Bedarf festgelegt (Periode der Stopfschwetlenmodulaton). Schliesslich werden Schwellenwertbereiche für $T_0$, ..., $T_{N-1}$ inklusive der Auflösung festgelegt. Für alle Stützwerte kann z. B. ein Bereich von 0 bis 4 Signaltakten (Annahme: Maximal 4 Stopfbits) und eine Auflösung $\varepsilon = 0.2$ festgelegt werden. Diese Bereiche eignen sich z. B. für die Implementierung eines 0/4-Stopfbitverfahrens.

2. Als nächstes werden alle Paare (K, m) bestimmt, die eine Stopfrate $\rho$ innerhalb des festgelegten Bereichs ergeben. Dazu wird folgende Formel benutzt.

$$\rho = \frac{m}{K \cdot N}$$

wobei
K = 1, 2, ... $K_{max}$
m = 0, 1, 2, ...
$K_{max}$ kann im Prinzip beliebig gross sein. Es hat sich jedoch gezeigt, dass mit $K_{max} \leq 32$ gute Resultate erzielt werden können.

3. Nun werden für alle Zahlenpaare (K, m) die Amplitudenwerte $D_{K, m}$ nach folgenden Formeln ermittelt:

$$D_{K,m} = \frac{1}{\pi \cdot K}\sqrt{(d^r_{K,m})^2 + (d^j_{K,m})^2}$$

*wobei*:

$$d^r_{K,m} = \frac{1}{N} \cdot \sum_{n=0}^{N-1} \cos\left[2 \cdot \pi \cdot \left(K \cdot T_n - \frac{m \cdot n}{N}\right)\right]$$

$$d^j_{K,m} = \frac{1}{N} \cdot \sum_{n=0}^{N-1} \sin\left[2 \cdot \pi \cdot \left(K \cdot T_n - \frac{m \cdot n}{N}\right)\right]$$

Zu jedem möglichen N-Tupel ($T_0$, ..., $T_{N-1}$) ergibt sich ein durch die zulässigen (K, m) Paare definiertes Set von Amplitudenwerten $D_{K, m}$. Für die zur Diskussion stehende numerische Optimierung interessiert vor allem, wie gross der in einem bestimmten Set auftretende maximale Amplitudenwert ist. Angestrebt wird nämlich ein Set, dessen Amplitudenwerte alle möglichst klein sind, bzw. einen geeigneten Maximalwert nicht überschreiten.

Bei der Optimierung wird das N-Tupel $(T_0, ..., T_{N-1})$ über alle zulässigen Stützwertkombinationen variiert und für jede Kombination werden alle Amplitudenwerte $D_{K, m}$ berechnet. Dasjenige N-Tupel $(T_0, ..., T_{N-1})$, das die besten Amplitudenwerte zeigt, definiert auch die optimale Stützwertkombination bzw. die optimale Modulationskurve.

Auf diese Weise können im Prinzip für alle Segmente optimale Modulationskurven bestimmt werden. In der Praxis kann die beschriebene Optimierung durchaus zu mehreren gleichwertigen Modulationskurven führen (wenn z. B. kein ausgeprägtes Minimum vorhanden ist). Die Erfindung erfasst also auch suboptimale Modulationskurven.

Die numerische Optimierung kann auch auf andere Weise erfolgen. Denkbar ist insbesondere, dass ein bestimmter Kurventyp als vorgegeben betrachtet wird (z. B. eine Sägezahn- oder Gausskurve) und dass nur noch die Skalierung (z. B. die Parameter Periodizität,. Wertebereich etc.) optimiert werden. So ist es z. B. möglich, dass in jedem Segment eine jeweils optimale Sägezahnkurve als Modulationskurve verwendet wird:

Für ein 0/4-Stopfverfahren wurde für den gesamten Bereich z. B. eine Kurve mit folgenden Werten errechnet:

1.2
2.4
2.4
1.2
0.0
0.0

Die erfindungsgemässen Modulationskurven und Segmente können in einem ROM des Terminals abgespeichert sein. Das Stopfverfahren zieht nacheinander die verschiedenen Werte der aufgrund der ermittelten Phasendifferenz zu berücksichtigenden Modulationskurve heran.

Für ein 0/2/4-Stopfverfahren beispielsweise sind zwei Schwellen (Schwelle_1, Schwelle_2) definiert, die synchron variieren (entsprechend den in der Tabelle vorgegebenen Werte) und einen Abstand von 2 HDSL-Takten haben. Für jeden Datenrahmen (Index i) ist ein neuer Schwellenwert festgelegt. (In der Regel wird sich der Schwellenwert ständig ändern, was jedoch nicht heissen will, dass ausnahmsweise zwei aufeinanderfolgende Werte gleich sein können.) Das Einfügen der Stopfbits erfolgt auf der Basis der folgenden Vergleiche:

$$\text{Phasendifferenz} \geq -\text{Schwelle\_1} \Rightarrow 0 \text{ Stopfbits einfügen}$$

$$-\text{Schwelle\_2} \leq \text{Phasendifferenz} < -\text{Schwelle\_1} \Rightarrow 2 \text{ Stopfbits einfügen}$$

$$\text{Phasendifferenz} < -\text{Schwelle\_2} \Rightarrow 4 \text{ Stopfbits einfügen}$$

Die erfindungsgemässe Stopfschwellenmodulation führt dazu, dass eine empfängerseitige PLL-Schaltung 17, 18 (vgl. Fig. 1) unterhalb der Grenzfrequenz (d. h. typischerweise im Bereich < 1 Hz) ziemlich kleine Jitter- bzw. Wanderamplitudenspitzen hat.

Die erfindungsgemässe Stopfschwellenmodulation bringt zwar besonders gute Resultate für 0/4- und 0/2/4-Stopfverfahren (d. h. Stopfverfahren mit einer oder zwei Schwellen). Andere Anwendungen sind jedoch durchaus sinnvoll. Grundsätzlich kommt es nicht darauf an, wieviele Bits jeweils eingefügt werden. Hardwaremässig sind neben Übertragungssystemen mit zwei Drahtpaaren auch solche mit drei oder nur einem von Interesse. Selbstverständlich kann die Erfindung in beliebigen Übertragungssystemen (namentlich auch in optischen) eingesetzt werden.

Zusammenfassend ist festzustellen, dass durch die erfindungsgemässe Segmentierung eine weitere Reduktion der Amplitudenspitzen des Phasenjitters erreicht werden kann.

**Bezugszeichenliste**

| | |
|---|---|
| 1.1, 1.2 | Datenquelle |
| 2.1, 2.2 | Datensenke |
| 3, 4 | Terminal |
| 5 | Übertragungsstrecke |
| 6.1, 6.2 | Kupferdrahtpaar |

| 7 | Taktsignalgenerator |
|---|---|
| 8 | Taktsignalableiter |
| 9, 10 | Steuerschaltung (Framer) |
| 11.1, 11.2 | Sender/-Empfängerschaltung |
| 12.1, 12.2 | "      " |
| 13.1, 13.2 | Schalter |
| 14.1, 14.2 | " |
| 15, 16 | Stopfkontrollschaltung |
| 17, 18 | PLL-Schaltung |
| 19 | Speicher |
| 20 | Vergleichen |
| 21 | AND-Gate |
| 22 | Frequenzteiler |
| 23 | Zähler |
| 24 | Speicher |
| 25 | ppm-Bereich |
| 26.1, ..., 26.9 | Segment |
| 27 | Frequenzdiskriminator |
| 28 | Tabellenspeicher |

**Patentansprüche**

1. Stopfverfahren für plesiochrone Datenübertragung, bei welcher

   a) Daten auf der Basis eines ersten Taktsignals (TX_DATA_IN) in einen elastischen Speicher (19) eingegeben und

   b) auf der Basis eines zweiten Taktsignals (HDSL_CLK), welches asynchron zum ersten läuft, ausgegeben werden, wobei

   c) beim Auslesen am Ende eines Datenrahmens Stopfbits nach Bedarf eingefügt werden und zwar gestützt darauf, dass eine zwischen den Taktsignalen gemessene Phasendifferenz mindestens eine vorgegebene Schwelle über- oder unterschreitet,
   **dadurch gekennzeichnet, dass**

   d) eine zwischen den Taktsignalen bestehende Differenzfrequenz gemessen und in Abhängigkeit davon, in welchem von mehreren vorgegebenen Segmenten sie liegt, eine entsprechend vordefinierte Modulationskurve als Schwelle eingesetzt wird.

2. Stopfverfahren nach Anspruch 1, **dadurch gekennzeichnet, dass** die Modulationskurve eines Segments im Hinblick auf eine minimale Jitteramplitude optimiert ist und wobei insgesamt mindestens zwei verschiedene Modulationskurven verwendet werden.

3. Stopfverfahren nach Anspruch 2, **dadurch gekennzeichnet, dass** die Segmente (26.1 bis 26.9) verschieden gross sind.

4. Stopfverfahren nach einem der Ansprüche 1 bis 3, **dadurch gekennzeichnet, dass** zur Erzeugung einer numerisch optimierten Modulationskurve für ein bestimmtes Segment vorab folgende Schritte ausgeführt werden:

   a) Ermittlung eines dem gewählten Segment entsprechenden zulässigen Bereichs der Stopfrate $\rho$;

   b) Festlegen einer gewünschten Anzahl N von Stützwerte $T_0$, ..., $T_{N-1}$ und einer numerischen Auflösung $\varepsilon$ für jeden Stützwert;

   c) Festlegen eines gewünschten maximalen Indexes $K_{max}$ und Bestimmen aller Indexpaare K, m, für die die Stopfrate $\rho = m/KN$ im zulässigen Bereich liegt;

d) Ermitteln derjenigen Stützwerte $T_0$, ..., $T_{N-1}$, die zu den kleinsten Werten der Amplitudenmaxima der Amplituden $D_{K,m}$ führen.

$$D_{K,m} = \frac{1}{\pi \cdot K} \sqrt{(d^r_{K,m})^2 + (d^j_{K,m})^2}$$

*wobei*:

$$d^r_{K,m} = \frac{1}{N} \cdot \sum_{n=0}^{N-1} \cos\left[2 \cdot \pi \cdot \left(K \cdot T_n - \frac{m \cdot n}{N}\right)\right]$$

$$d^j_{K,m} = \frac{1}{N} \cdot \sum_{n=0}^{N-1} \sin\left[2 \cdot \pi \cdot \left(K \cdot T_n - \frac{m \cdot n}{N}\right)\right]$$

**5.** Stopfverfahren nach Anspruch 4, **dadurch gekennzeichnet, dass** die Zahl N $\leq$10, insbesondere $\leq$7 und vorzugsweise $\geq$ 5 ist.

**6.** Stopfverfahren nach Anspruch 4 oder 5, **dadurch gekennzeichnet, dass** der maximale Index $K_{max} \leq 2^5$ ist.

**7.** Stopfverfahren nach einem der Ansprüche 4 bis 6, **dadurch gekennzeichnet, dass** die Auflösung 1/100 $\leq \varepsilon \leq$ 1/20 beträgt.

**8.** Stopfverfahren nach einem der Ansprüche 1 bis 7, **dadurch gekennzeichnet, dass** mindestens 4 Segmente verwendet werden.

**9.** Datenübertragungssystem, welches zur Durchführung eines Stopfverfahrens nach einem der Ansprüche 1 bis 3 geeignet ist, mit endseitig einer Übertragungsstrecke (5) angeordneten Terminals (3, 4), wobei die Terminals (3, 4)

   a) eine Taktsignalquelle (7) für die Datenübertragung und zumindest einen elastischen Speicher (19) zum Zwischenspeichern der eingehenden und zu übertragenden Daten,

   b) einen Vergleicher (20) zum Ermitteln einer Phasendifferenz zwischen einem Taktsignal der eingehenden Daten und der Taktsignalquelle (7) und

   c) einen Rahmengenerator (15, 16) mit einer Stopfbitkontrollschaltung (15, 16) aufweisen,
   **gekennzeichnet durch**

   d) eine Schaltung zum Bestimmen einer zwischen den Taktsignalen bestehenden Differenzfrequenz,

   e) einen Speicher mit je einer Modulationskurve für jedes von mehreren vorgegebenen Segmenten und

   f) eine Schaltung zum Bestimmen, in welchem der Segmente die Differenzfrequenz liegt, um in Abhängigkeit vom ermittelten Segment die entsprechend vordefinierte Modulationskurve als Schwelle anzuwenden.

**10.** Terminal für ein Datenübertragungssystem nach Anspruch 9, umfassend

   a) eine Taktsignalquelle (7) für die Datenübertragung und zumindest einen elastischen Speicher (19) zum Zwischenspeichern der eingehenden und zu übertragenden Daten,

   b) einen Vergleicher (20) zum Ermitteln einer Phasendifferenz zwischen einem Taktsignal der eingehenden Daten und der Taktsignalquelle (7) und

   c) einen Rahmengenerator (15, 16) mit einer Stopfbitkontrollschaltung (15, 16)
   **gekennzeichnet durch**

d) eine Schaltung zum Bestimmen einer zwischen den Taktsignalen bestehenden Differenzfrequenz.

e) einen Speicher mit je einer Modulationskurve für jedes von mehreren vorgegebenen Segmenten und

f) eine Schaltung zum Bestimmen, in welchem der Segmente die Differenzfrequenz liegt, um in Abhängigkeit vom ermittelten Segment die entsprechend vordefinierte Modulationskurve als Schwelle anzuwenden.

**Claims**

1. A stuffing procedure for plesiochronous data transmission, in which

   a) data is input on the basis of a first clock pulse (TX_DATA_IN) into an elastic memory and

   b) retrieved on the basis of a second clock pulse (HWL_CLK), which runs asynchronously with the first, wherein

   c) stuffing bits are inserted, as required, while reading out at the end of a data frame, namely, based on a phase difference measured between the clock pulses exceeding or falling short of at least one specified threshold,
   **characterized in that**

   d) a difference frequency existing between the clock pulses is measured and, depending upon which of several specified segments it lies in, a correspondingly predefined modulation curve is used as threshold.

2. A stuffing procedure according to claim 1, **characterized in that** the modulation curve of a segment is optimised with respect to a minimal jitter amplitude, and wherein at least two different modulation curves are used.

3. A stuffing procedure according to claim 2, **characterized in that** the segments (26.1 to 26.9) are of different size.

4. A stuffing procedure according to any one of claims 1 to 3, **characterized in that** the following steps are carried out in advance for generating a numerically optimised modulation curve for a specific segment:

   a) determination of an admissible stuffing rate p area corresponding with the selected segment;

   b) fixing a desired number N of supporting values $T_0$, ..., $T_{N-1}$ and a numerical resolution $\varepsilon$ for each supporting value;

   c) establishing a desired maximum index $K_{max}$ and determination of all index pairs K, m, for which the stuffing rate $\rho = m/KN$ lies in the admissible range;

   d) determination of those supporting values $T_0$, ... , $T_{N-1}$, which lead to the smallest values of the amplitude maxima of amplitudes $D_{K, m}$,

$$D_{K,m} = \frac{1}{\pi \cdot K} \sqrt{(d^r_{K,m})^2 + (d^i_{K,m})^2}$$

   *wherein:*

$$d^r_{K,m} = \frac{1}{N} \cdot \sum_{n=0}^{n-1} \cos\left[2 \cdot \pi \left(K \cdot T_n - \frac{m \cdot n}{N}\right)\right]$$

$$d^1_{K,m} = \frac{1}{N} \cdot \sum_{n=0}^{n-1} \sin\left[ 2 \cdot \pi \left( K \cdot T_n - \frac{\overline{\overline{m \cdot n}}}{N} \right) \right]$$

5. A stuffing procedure according to claim 4, **characterized in that** the number $N \leq 10$, especially $\leq 7$, and preferably is $\geq 5$.

6. A stuffing procedure according to claim 4 or 5, **characterized in that** the maximum index is $K_{max} \leq 2^5$.

7. A stuffing procedure according to any one of claims 4 to 6, **characterized in that** the resolution amounts to $1/100 \leq \varepsilon \leq 1/20$.

8. A stuffing procedure according to any one of claims 1 to 7, **characterized in that** at least 4 segments are used.

9. A data transmission system which is suitable for carrying out a stuffing procedure according to any one of claims 1 to 3, with terminals (3, 4) arranged at the end side of a transmission stretch (5), wherein the terminals (3,4)

    a) have a clock pulse source (7) for data transmission and at least one elastic memory (19) for intermediate storage of the entering data to be transmitted,

    b) a comparator (20) for ascertaining a phase difference between a clock pulse of the entering data and the clock pulse source (7) and

    c) a frame generator (15, 16) with a stuffing bit control circuit (15, 16),
    **characterized by**

    d) a circuit for determining a difference frequency existing between the clock pulses,

    e) a memory with one modulation curve each for each of several specified segments, and

    f) a circuit for determining in which of the segments the difference frequency lies, in order to use the appropriately predefined modulation curve as a threshold depending upon the segment determined.

10. A terminal for a data transmission system according to claim 9, including

    a) a clock pulse source (7) for data transmission and at least one elastic memory (19) for intermediate storage of the entering data to be transmitted,

    b) a comparator (20) for ascertaining a phase difference between a clock pulse of the entering data and the clock pulse source (7) and

    c) a frame generator (15, 16) with a stuffing bit control circuit (15, 16),
    **characterized by**,

    d) a circuit for determining a difference frequency existing between the clock pulses,

    e) a memory with one modulation curve each for each of several specified segments and

    f) a circuit for determining in which of the segments the difference frequency lies, in order to use the appropriately predefined modulation curve as a threshold depending upon the segment determined.

**Revendications**

1. Procédé de remplissage pour une transmission plésiochrone de données, selon lequel

a) des données sont introduites sur la base d'un premier signal de cadence (TX_DATA_IN) dans une mémoire élastique (19), et

b) sont délivrées sur la base d'un second signal de cadence (HDSL_CLK), qui est asynchrone par rapport au premier signal,

c) selon lequel, lors de la lecture à la fin d'une trame de données, on introduit si besoin des bits de remplissage, et ce en se basant sur le fait qu'une différence de phase mesurée entre les signaux de cadence dépasse au moins un seuil prédéterminé par valeurs supérieures ou par valeurs inférieures,

**caractérisé en ce que**

d) on mesure une fréquence différentielle existant entre les signaux de cadence et on utilise en tant que seuil une courbe de modulation prédéfinie de façon correspondante en fonction de celui de plusieurs segments prédéterminés, dans lequel cette différence se situe.

2. Procédé de remplissage selon la revendication 1, **caractérisé en ce que** la courbe de modulation d'un segment est optimisée en ce qui concerne une amplitude minimale de petites oscillations et **en ce qu'**on utilise ensemble au moins deux courbes de modulation différentes.

3. Procédé de remplissage selon la revendication 2, **caractérisé en ce que** les segments (26.1-26.9) ont des tailles différentes.

4. Procédé de remplissage selon l'une des revendications 1 à 3, **caractérisé en ce que** pour l'obtention d'une courbe de modulation optimisée de façon numérique, pour un segment déterminé, on utilise les étapes suivantes consistant à :

a) déterminer une gamme admissible, correspondant au segment sélectionné, de la cadence de remplissage $\rho$;

b) fixer un nombre désiré de valeurs de base $T_0$, ..., $T_{N-1}$ et une résolution numérique $\varepsilon$ pour chaque valeur d'appui;

c) fixer un indice maximum désiré $K_{max}$ et déterminer tous les couples d'indices K, m pour la cadence de remplissage $\rho = m/KN$ dans la gamme admissible;

d) déterminer les valeurs d'appui $T_0$, ... , $T_{N-1}$, qui conduisent aux plus petites valeurs des amplitudes $D_{K,m}$.

$$D_{K,m} = \frac{1}{\pi \cdot K} \sqrt{\left(d_{K,m}^r\right)^2 + \left(d_{K,m}^t\right)^2}$$

avec

$$d_{K.m}^r = \frac{1}{N} \cdot \sum_{n=0}^{N-t} \cos\left[2 \cdot \pi \cdot \left(K \cdot T_n - \frac{m \cdot n}{N}\right)\right]$$

$$d_{K.m}^t = \frac{1}{N} \cdot \sum_{n=0}^{N-t} \sin\left[2 \cdot \pi \cdot \left(K \cdot T_n - \frac{m \cdot n}{N}\right)\right]$$

5. Procédé de remplissage selon la revendication 4, **caractérisé en ce que** le nombre N est N $\leq$ 10, en particulier $\leq$ 7 et de préférence $\geq$ 5.

6. Procédé de remplissage selon la revendication 4 ou 5, **caractérisé en ce que** l'indice maximum est $K_{max} \leq 2^5$.

7. Procédé de remplissage selon l'une des revendications 4 à 6, **caractérisé en ce que** la relation $1/100 \leq \varepsilon \leq 1/20$ est vérifiée.

8. Procédé de remplissage selon l'une des revendications 1 à 7, **caractérisé en ce qu'**on utilise au moins 4 segments.

9. Système de transmission de données, qui convient pour la mise en oeuvre d'un procédé de remplissage selon l'une des revendications 1 à 3, comportant des terminaux (3, 4) disposés aux extrémités d'une section de transmission (5), les terminaux (3, 4) comportant

a) une source de signaux de cadence (7) pour la transmission de données et au moins une mémoire élastique (10) pour la mémorisation temporaire des données arrivantes et à transmettre,
b) un comparateur (20) pour déterminer une différence de phase entre un signal de cadence des données entrantes et la source de signaux de cadence (7),
c) un générateur (15, 16) de trames comportant un circuit (15, 16) de commande des bits de remplissage,
**caractérisé par**
d) un circuit pour déterminer une fréquence différentielle qui existe entre les signaux de cadence,
e) une mémoire comportant respectivement une courbe de modulation pour chacun de plusieurs segments prédéterminés, et
f) un circuit pour déterminer, celui des segments dans lequel est situé la fréquence différentielle, de manière à utiliser en tant que seuil la courbe de modulation prédéfinie de façon correspondante, en fonction du segment déterminé.

10. Terminal pour un système de transmission de données selon la revendication 9, comprenant:

a) une source de signaux de cadence (7) pour la transmission de données et au moins une mémoire élastique (10) pour la mémorisation temporaire des données arrivantes et à transmettre,
b) un comparateur (20) pour déterminer une différence de phase entre un signal de cadence des données entrantes et la source de signaux de cadence (7),
c) un générateur (15, 16) de trames comportant un circuit (15, 16) de commande des bits de remplissage,
**caractérisé par**
d) un circuit pour déterminer une fréquence différentielle qui existe entre les signaux de cadence,
e) une mémoire comportant respectivement une courbe de modulation pour chacun de plusieurs segments prédéterminés, et
f) un circuit pour déterminer, celui des segments dans lequel est située la fréquence différentielle, de manière à utiliser en tant que seuil la courbe de modulation prédéfinie de façon correspondante, en fonction du segment déterminé.

Fig.1

TX-DATA-IN ⟶ [19] ⟶ TX-DATA-OUT

WRITE-CLK ⟶    READ-CLK

HDSL-CLK ⟶ [24]

ENABLE [21]

[20] ⟵ HDSL-CLK

## Fig.2

[28]

[27]

## Fig.3

TX-USER-CLK ⟶ [22] $\div 2^{21}$ ⟶ [23] ⟶ [24]

HDSL-CLK

## Fig.4

[25]

| 26.1 | 26.2 | 26.3 | 26.4 | 26.5 | 26.6 | 26.7 | 26.8 | 26.9 |

27.1     27.9

-82   -65   -39   -22   -7   0.6   23   45   65   +82

ppm